# FASCICULE DE BREVET EUROPEEN

(11) **EP 1 655 430 B1**
(45) Date de publication et mention de la délivrance du brevet: **17.12.2008**
(21) Numéro de dépôt: 05300892.6
(22) Date de dépôt: 04.11.2005
(51) Int. Cl.: E05B 65/19

(54) **Dispositif pour interdire la manoeuvre non autorisée du câble de verrouillage du capot d'un véhicule automobile**
Vorrichtung zum Untersagen der unbefugten Betätigung des Motorhauben-Verriegelungskabels eines Kraftfahrzeuges
Device for preventing unauthorised operation of the bonnet closure cable of a motor vehicle

(30) Priorité: 08.11.2004 FR 0452554
(43) Date de publication de la demande: 10.05.2006
(73) Titulaire: Peugeot Citroën Automobiles SA, 78943 Vélizy-Villacoublay Cedex (FR)
(72) Inventeur: CRABOT, Auguste, 35230, NOYAL CHATILLON SUR SEICHE (FR)

(56) Documents cités:
- EP-A- 0 926 306
- GB-A- 2 276 413
- GB-A- 2 347 458
- GB-A- 2 348 921
- US-A- 5 172 946
- PATENT ABSTRACTS OF JAPAN vol. 1996, no. 10, 31 octobre 1996 (1996-10-31) & JP 08 150958 A (SUZUKI MOTOR CORP), 11 juin 1996 (1996-06-11)

## Description

L'invention concerne les câbles de verrouillage de capot de véhicule automobile et plus particulièrement un support pour de tels câbles.

Actuellement, dans la conception des véhicules, le groupe moto-ventilateur, en général d'une hauteur importante jusqu'à 500 mm, a besoin de recevoir un flux d'air important. C'est la raison pour laquelle on trouve, en face avant des véhicules des bouches d'entrée d'air de plus en plus importantes.

Or cette configuration peut engendrer un risque d'effraction de la serrure du capot moteur du véhicule. En effet, la grille d'entrée d'air, en général située sous le bouclier, peut laisser des espaces d'une hauteur importante entre chaque barreau dans lesquels une main ou un objet d'effraction, tel qu'un crochet, peuvent facilement être introduits pour permettre l'accès au câble de verrouillage de capot.

Il est connu de JP08150958, qui décrit un dispositif selon le préambule de le revendication 1, et de GB2276413 de disposer, respectivement sur une traverse et sur un élément de structure, directement un moyen de support d'un câble de verrouillage d'un capot de véhicule automobile ou une plaque de protection d'un mécanisme de verrouillage afin d'interdire un accès à ce dernier.

Le but de l'invention est donc de proposer une solution qui permette d'éviter l'accès au câble de verrouillage de capot depuis la grille d'entrée d'air.

Pour ce faire, l'invention a pour objet un dispositif permettant d'interdire la manoeuvre non autorisée, depuis l'extérieur d'un véhicule automobile, du câble de verrouillage du capot dudit véhicule constitué d'un support rigide de forme allongée, présentant une ouverture ménagée sur toute la longueur et adaptée pour permettre l'introduction du câble et de sa gaine dans ledit support, de moyens permettant de maintenir le câble et sa gaine dans le support et de moyens de fixation de celui-ci sur la structure et/ou un organe du véhicule de façon que l'ouverture précitée soit rendue inaccessible depuis les ouvertures avant du véhicule,
caractérisé en ce qu'il comprend une enveloppe de protection rigide (103, 206) disposée à l'une de ses extrémités et de forme adaptée pour loger, au moins partiellement, une serrure (3) de fermeture du capot.

Selon un mode de réalisation, le support rigide est constitué par un tube de section circulaire, comportant une fente longitudinale sur toute sa longueur.

Selon une variante de réalisation le support rigide est constitué par une pièce monobloc réalisée en matière plastique moulée apte à épouser étroitement les formes de la paroi de l'organe sur lequel elle est maintenue en appui.

Avantageusement, l'enveloppe rigide comporte un anneau fendu conformé pour accueillir une gorge formée dans l'extrémité de la gaine du câble de façon à arrêter la dite gaine du côté de la serrure.

On notera encore que la gaine du câble peut porter une bague, par exemple en matière plastique ou en élastomère, emmanchée au montage à l'extrémité du support rigide, de façon à maintenir la gaine à l'extrémité du support.

Egalement, l'invention a pour objet un véhicule selon la revendication 6.

D'autres avantages et caractéristiques ressortiront mieux à la lecture de la description détaillée de deux modes de réalisation de l'invention faite en référence aux figures 1 à 5 qui représentent :
- Figure 1 : une vue en perspective d'un premier mode de réalisation du support selon l'invention ;
- Figure 1a : une vue de détail de l'une des extrémités du support.
- Figure 2 : une vue de face du support de la figure 1 tel qu'il est agencé sur le groupe moto-ventilateur du véhicule automobile ;
- Figure 3 : une vue partielle, côté serrure du capot, de l'invention en cours de montage
- Figure 4 : une vue en perspective du deuxième mode de réalisation du support selon l'invention.
- Figure 5 : une vue de face du support de la figure 4 tel qu'il est agencé sur le groupe moto-ventilateur du véhicule

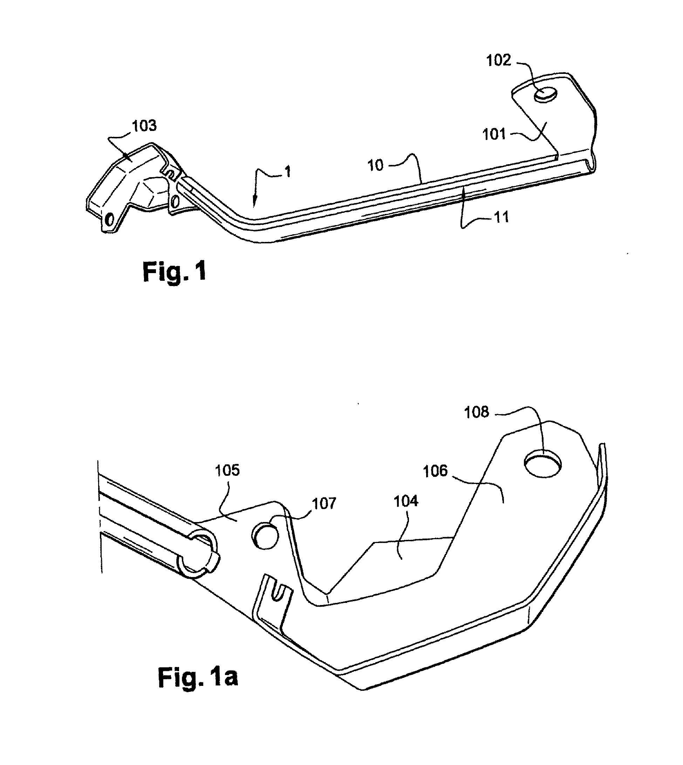

Sur la figure 1, on a représenté une vue d'un dispositif 1 selon l'invention. Ce dispositif 1 en une seule pièce est constitué dans sa partie médiane d'un support 10 en forme de tube rigide de section circulaire, comportant une fente longitudinale 11 ouverte sur environ le quart de sa circonférence.

Une des extrémités du support 10 se termine par une patte de fixation aplatie 101 munie d'un oeillet 102.

L'autre extrémité se termine par une enveloppe métallique de protection 103 que l'on voit mieux sur la figure 1a. L'enveloppe 103 est composée d'une partie centrale formant gousset 104 et de deux pattes de fixation latérales, 105 et 106 munie chacune d'un oeillet, respectivement, 107 et 108.

Le gousset 104 est de dimensions suffisantes pour contenir une serrure d'ouverture de capot moteur, l'arrivée d'un câble entouré de sa gaine et le dispositif d'arrêt de gaine correspondant.

L'enveloppe 103 peut s'avérer utile dans le cas où l'agencement de la face avant du véhicule laisserait un accès direct à tout ou partie de la serrure.

Les oeillets 102, 107, 108 sont prévus pour accueillir chacun une vis de fixation du dispositif sur le véhicule.

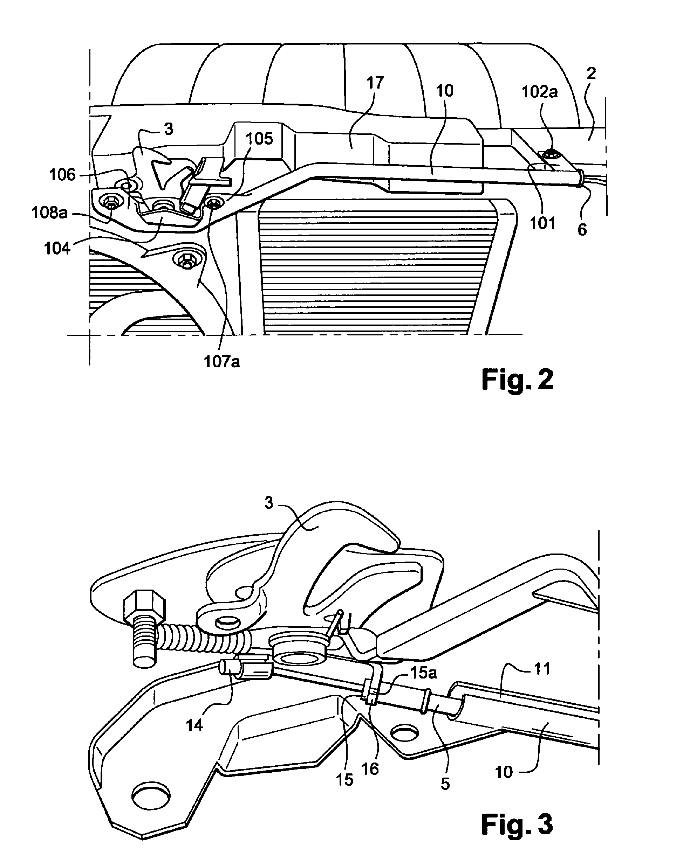

La figure 2 montre l'implantation du dispositif 1 à l'avant d'un véhicule automobile 2.

Le dispositif est fixé d'un côté sur une traverse avant 2 par une vis 102a coopérant avec l'oeillet 102 de la patte 101. De l'autre côté, il est fixé de part et d'autre de la gâche de serrure 3 du capot au moyen des vis 107a et 108a coopérant avec les oeillets 107 et 108 des pattes latérales 105 et 106 de l'enveloppe de protection 103.

L'ouverture 11 du support 10 est orientée de façon à ne pas être accessible depuis les ouvertures avant du véhicule.

Comme on le voit sur la figure 3, le câble 4 d'ouverture du capot et sa gaine 5 sont insérés à l'intérieur de la fente 11 du support rigide 10. Il est fixé, de manière connue en soi, par l'une de ses extrémités 14 à la gâche de serrure et à l'autre extrémité à la manette d'ouverture située à l'intérieur de l'habitacle non représenté ici.

L'extrémité 15 de la gaine 5 est munie d'une gorge 15a qui vient s'engager dans un anneau fendu 16, solidaire de l'enveloppe 103, de façon à arrêter la gaine du côté de la serrure.

De l'autre côté, une bague 6, par exemple en matière plastique ou en élastomère, est emmanchée à l'extrémité du support tubulaire rigide 10 du côté de la traverse 2. Cette bague permet le maintien de la gaine du câble à l'extrémité du support 10.

Pour réaliser le montage selon l'invention, un opérateur sur ligne d'assemblage a tout d'abord vissé la serrure sur la partie de la façade avant prévue à cet effet et monté l'extrémité du câble d'ouverture sur la manette située à l'intérieur de l'habitacle.

Le câble et sa gaine sont placés dans le support de façon que la gorge 15a soit engagée dans l'anneau 16 puis les pattes 101, 105 et 106 sont fixées respectivement à la traverse avant et de part et d'autre de la serrure et enfin la bague 6 est poussée dans le support tubulaire 10.

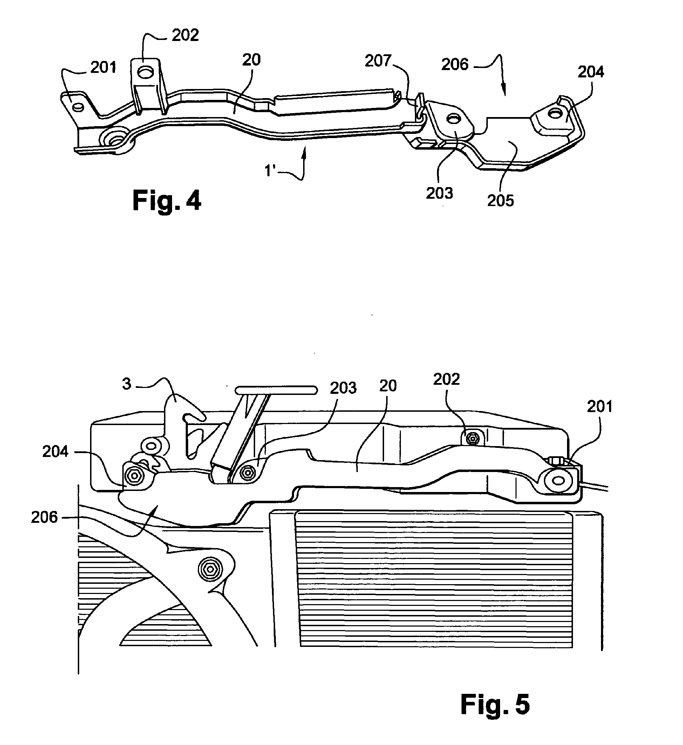

La figure 4 est une vue en perspective d'un dispositif 1' selon un autre mode de réalisation applicable, en particulier, lorsque ce dispositif doit être fixé sur une surface complexe.

Il est constitué d'un support 20 monobloc réalisé en matière plastique moulée. Comme on le voit sur la figure 5, le support est fixé, en appui, sur le groupe moto-ventilateur 17 par des pattes 201 et 202, venues de moulage avec ledit support et, du côté de la serrure 3, par des pattes 203, 204 situées de part et d'autre du gousset 5 et formant avec celui-ci l'enveloppe 206 servant de cache à la serrure 3. Ainsi que dans le mode de réalisation précédent, le support comporte encore un arrêt de gaine 207.

Le support épouse étroitement les formes de la paroi du groupe moto-ventilateur sur lequel il est en appui, de ce fait, il n'est plus nécessaire d'avoir une bague en sortie de câble pour maintenir celui-ci, il ne peut pas se dégager de son logement.

La pièce selon l'invention est très simple à réaliser et à implanter. Elle empêche efficacement le contact entre la main ou l'extrémité d'un crochet et le câble, ce dernier se trouvant inséré dans une protection rigide pouvant être solidement fixée à un élément de structure et/ou à un organe, tel le groupe moto-ventilateur du véhicule.

## Revendications

1. Dispositif permettant d'interdire la manoeuvre non autorisée, depuis l'extérieur d'un véhicule automobile, du câble (4) de verrouillage du capot dudit véhicule, le dispositif étant constitué d'un support rigide (10, 20), de forme allongée, présentant une ouverture (11) ménagée sur toute sa longueur et adaptée pour permettre l'introduction du câble (4) et de sa gaine (5) dans ledit support, de moyens (6, 16, 207) permettant de maintenir le câble et sa gaine dans le support et de moyens de fixation (101, 105, 106, 201, 202, 230, 204) de celui-ci sur le véhicule de façon que l'ouverture du support soit rendue inaccessible depuis les ouvertures avant du véhicule, **caractérisé en ce qu'**il comprend une enveloppe de protection rigide (103, 206) disposée à l'une de ses extrémités et de forme adaptée pour loger, au moins partiellement, une serrure (3) de fermeture du capot.

2. Dispositif selon la revendication 1, **caractérisé en ce que** le support rigide est constitué par un tube (10) de section circulaire, comportant une fente longitudinale (11).

3. Dispositif selon la revendication 1, **caractérisé en ce que** le support rigide est constitué par une pièce monobloc (20) réalisée en matière plastique moulée apte à épouser étroitement les formes de la paroi du groupe moto-ventilateur (17) sur lequel elle est maintenue en appui.

4. Dispositif selon l'une des revendications précédentes, **caractérisé en ce que** l'enveloppe (103, 206) comporte un anneau fendu (16, 207) conformé pour accueillir une gorge (15a) formée dans l'extrémité (15) de la gaine (5) du câble (4) de façon à arrêter ladite gaine du côté de la serrure.

5. Dispositif selon l'une des revendications précédentes, **caractérisé en ce que**, la gaine (15) du câble (5) porte une bague (6), par exemple en matière plastique ou en élastomère, emmanchée au montage à l'extrémité du support rigide (10), de façon à maintenir la gaine à l'extrémité du support.

6. Véhicule automobile comportant une structure sur laquelle est articulé un capot, et au moins un groupe moto-ventilateur (17) ainsi qu'un dispositif permettant d'interdire la manoeuvre non-autorisée depuis l'extérieur du véhicule, le dispositif étant conforme à l'une quelconque des revendications précédentes.

7. Véhicule selon la revendication 6, **caractérisé en ce que** lesdits moyens de fixation du support sont fixés sur la structure (2) du véhicule ou sur un groupe moto-ventilateur (17).

8. Véhicule selon la revendication 7, **caractérisé en ce que** la structure (2) est une traverse avant.

## Claims

1. Device for preventing the unauthorised operation, from outside a motor vehicle, of the cable (4) for locking the bonnet of said vehicle, the device consisting of a rigid support (10, 20), of elongate shape, having an opening (11) provided over its entire length and suitable for allowing the cable (4) and its sheath (5) to be introduced into said support, of means (6, 16, 207) for keeping the cable and its sheath in place in the support, and of means (101, 105, 106, 201, 202, 230, 204) for fastening the latter to the vehicle so that the opening in the support is made inaccessible from the front openings of the vehicle, **characterized in that** the device includes a rigid protective envelope (103, 206) placed at one of its ends and having a shape suitable for housing, at least partially, a catch (3) for locking the bonnet.

2. Device according to Claim 1, **characterized in that** the rigid support is formed by a tube (10) of circular cross section, having a longitudinal slot (11).

3. Device according to Claim 1, **characterized in that** the rigid support is formed by a one-piece component (20) made of a moulded plastic, capable of closely following the shape of the wall of the motor-fan unit (17) on which said component is held bearingly in place.

4. Device according to one of the preceding claims, **characterized in that** the envelope (103, 206) includes a split ring (16, 207) shaped so as to receive a groove (15a) formed in the end (15) of the sheath (5) of the cable (4) so as to stop said sheath on the catch side.

5. Device according to one of the preceding claims, **characterized in that** the sheath (15) of the cable (5) has a ring (6), for example made of a plastic or an elastomer, fitted onto the end of the rigid support (10) so as to keep the sheath in place on the end of the support.

6. Motor vehicle having a structure to which a bonnet is articulated, and at least one motor-fan unit (17) and a device for preventing the unauthorized operation from outside the vehicle, the device being in accordance with any one of the preceding claims.

7. Vehicle according to Claim 6, **characterized in that** said means for fastening the support are fastened to the structure (2) of the vehicle or to a motor-fan unit (17) .

8. Vehicle according to Claim 7, **characterized in that** the structure (2) is a front cross member.

## Patentansprüche

1. Vorrichtung, die es ermöglicht, die unbefugte Betätigung, von außerhalb eines Kraftfahrzeugs, des Motorhauben-Verriegelungskabels (4) des Fahrzeugs zu untersagen, wobei die Vorrichtung aus einem starren Träger (10, 20), von länglicher Form, der eine Öffnung (11) aufweist, die über seine gesamte Länge angebracht ist, der angepasst ist, um die Einführung des Kabels (4) und dessen Hülle (5) in den Träger zu ermöglichen, aus Mitteln (6, 16, 207), die es ermöglichen, das Kabel und dessen Hülle in dem Träger zu halten, und aus Mitteln zur Befestigung (101, 105, 106, 201, 202, 230, 204) desselben auf dem Fahrzeug besteht, so dass die Öffnung des Trägers von den vorderen Öffnungen des Fahrzeugs aus unerreichbar gemacht wird, **dadurch gekennzeichnet, dass** sie einen starren Schutzmantel (103, 206) umfasst, der an einem ihrer Enden angeordnet ist, und von einer Form, die geeignet ist, um mindestens teilweise ein Schloss (3) zum Abschließen der Motorhaube zu unterzubringen.

2. Vorrichtung nach Anspruch 1, **dadurch gekennzeichnet, dass** der starre Träger aus einem Rohr (10) mit kreisförmigem Querschnitt besteht, der einen längsförmigen Schlitz (11) umfasst.

3. Vorrichtung nach Anspruch 1, **dadurch gekennzeichnet, dass** der starre Träger aus einem Monoblockteil (20) besteht, das aus Formkunststoff hergestellt ist, das in der Lage ist, sich eng an die Formen der Wand der Motor-Ventilator-Einheit (17) anzupassen, auf der es in Anlage gehalten wird.

4. Vorrichtung nach einem der vorhergehenden Ansprüche, **dadurch gekennzeichnet, dass** der Mantel (103, 206) einen Schlitzring (16, 207) umfasst, der angepasst ist, um eine Rille (15a) aufzunehmen, die im Ende (15) der Hülle (5) des Kabels (4) gebildet ist, um die Hülle neben dem Schloss zu arretieren.

5. Vorrichtung nach einem der vorhergehenden Ansprüche, **dadurch gekennzeichnet, dass** die Hülle (15) des Kabels (5) einen Ring (6) trägt, zum Beispiel aus Kunststoff oder aus Elastomer, der bei der Montage auf das Ende des starren Trägers (10) aufgesteckt wird, um die Hülle am Ende des Trägers zu halten.

6. Kraftfahrzeug, das eine Struktur umfasst, auf der eine Motorhaube beweglich befestigt ist, und mindestens eine Motor-Ventilator-Einheit (17) sowie eine Vorrichtung, die es ermöglicht, die unbefugte Betätigung von außerhalb des Fahrzeugs zu unterbinden, wobei die Vorrichtung einem der vorhergehenden Ansprüche entspricht.

7. Fahrzeug nach Anspruch 6, **dadurch gekennzeichnet, dass** die Mittel zur Befestigung des Trägers auf der Struktur (2) des Fahrzeugs oder auf der Motor-Ventilator-Einheit (17) befestigt sind.

8. Fahrzeug nach Anspruch 7, **dadurch gekennzeichnet, dass** die Struktur (2) eine Fronttraverse ist.
